Europäisches Patentamt

European Patent Office

Office européen des brevets

(11) Veröffentlichungsnummer: **0 322 365**
**A1**

(12) **EUROPÄISCHE PATENTANMELDUNG**

(21) Anmeldenummer: **88810874.3**

(22) Anmeldetag: **19.12.88**

(51) Int. Cl.⁴: **B 32 B 27/08**
**B 65 D 65/40**

(30) Priorität: **23.12.87 CH 5046/87**

(43) Veröffentlichungstag der Anmeldung:
**28.06.89 Patentblatt 89/26**

(84) Benannte Vertragsstaaten:
**AT BE CH DE FR GB IT LI NL SE**

(71) Anmelder: **ALMA SA**
**CH-1783 Pensier/FR (CH)**

(72) Erfinder: **Peter, Mario**
**Chemin du Port**
**CH-1786 Sugiez/FR (CH)**

**Grämiger, Erich**
**Quellenstrasse 9**
**CH-3065 Bolligen/BR (CH)**

(74) Vertreter: **Schweizer, Hans et al**
**Bovard AG Patentanwälte VSP Optingenstrasse 16**
**CH-3000 Bern 25 (CH)**

(54) **Mehrschichtige Folie.**

(57) Auf der einen Seite einer als Träger (1) dienenden Folie ist eine Siegelschicht (4) und auf der anderen Seite des Trägers (1) eine Schicht aus thermoplastischem Polyester (3) vorhanden und unter Verwendung von geeigneten Haftvermittlern (2, 2a) mit der als Träger (1) dienenden Folie unlösbar verbunden. Der Träger (1) kann zum Erreichen von bestimmten Barriereneigenschaften selbst aus mehreren Schichten (5, 6, 7, 6, 5) bestehen. Die mehrschichtige Folie wird im Koextrusionsverfahren in einem Arbeitsgang hergestellt. Die Folie wird insbesondere zur Warmversiegelung von aus Kunststoff bestehenden Verpackungsbehältern für die Lebensmittelindustrie verwendet. Sie zeichnet sich dadurch aus, dass die Siegelschicht ohne die Verwendung von Lösungsmitteln aufgebracht worden ist.

*FIG. 1*

EP 0 322 365 A1

Bundesdruckerei Berlin

**Beschreibung**

## Mehrschichtige Folie

Die vorliegende Erfindung betrifft eine mehrschichtige Folie gemäss dem Oberbegriff des Patentanspruches 1, ein Verfahren zur Herstellung der Folie gemäss dem Oberbegriff des Patentanspruches 6 und eine Verwendung der Folie gemäss dem Oberbegriff des Patentanspruches 7.

Verpackungsbehälter aus Kunststoff, insbesondere zum Lagern von Lebensmitteln, werden oft mit einem eine Siegelschicht aufweisenden Deckel unter Anwendung von Wärme versiegelt. Die Methode der Wärmeversiegelung ist bekannt und zeichnet sich dadurch aus, dass dicht verschlossene Verpackungsbehälter leicht in der Siegelnaht aufreissbar sind. Bei den heute bekannten Ausführungsformen solcher Deckel aus Kunststoff oder Aluminium als Trägermaterial wird die Siegelschicht nachträglich auf der einen Seite des Trägers ganz oder partiell in Form eines Siegellackes aufgetragen. Alle diese Lacke enthalten Lösungsmittel, die sich nie vollkommen verflüchtigen. Es ist ein Nachteil dieser Ausführungsform, dass es immer wieder vorkommt, dass empfindliche Lebensmittel einen Lösungsmittelgeschmack annehmen können.

Es ist die Aufgabe der vorliegenden Erfindung, eine zum Verschliessen von Verpackungsbehältern durch Wärmesiegelung geeignete Folie zu schaffen, die eine Siegelschicht ohne Lösungsmittel enthält und die in einem Arbeitsgang herstellbar ist.

Die Lösung dieser Aufgabe erfolgt anhand der Merkmale der kennzeichnenden Teile der Patentansprüche 1, 6 und 7.

Die erfindungsgemässe Folie wird im folgenden anhand von Zeichnungen beispielsweise näher beschrieben. Es zeigen

Fig. 1 einen Schnitt durch eine Folie, die keine Gassperrschicht aufweist und

Fig. 2 einen Schnitt durch eine eine Gassperrschicht enthaltende Folie.

Kunststoffolien mit mehreren Schichten aus verschiedenen Materialien werden seit längerer Zeit in einem Arbeitsgang auf Koextrusionsanlagen hergestellt. Mehrere auf eine gemeinsame Düse wirkende Extruder sind für die Zuführung der verschiedenen als Granulat in je einem den einzelnen Extrudern zugeordneten Lagerbehälter vorhandenen Materialien besorgt.

Das Koextrusionsverfahren zur Herstellung von mehrschichtigen Kunststoffolien ist bekannt und wird hier nicht weiter beschrieben.

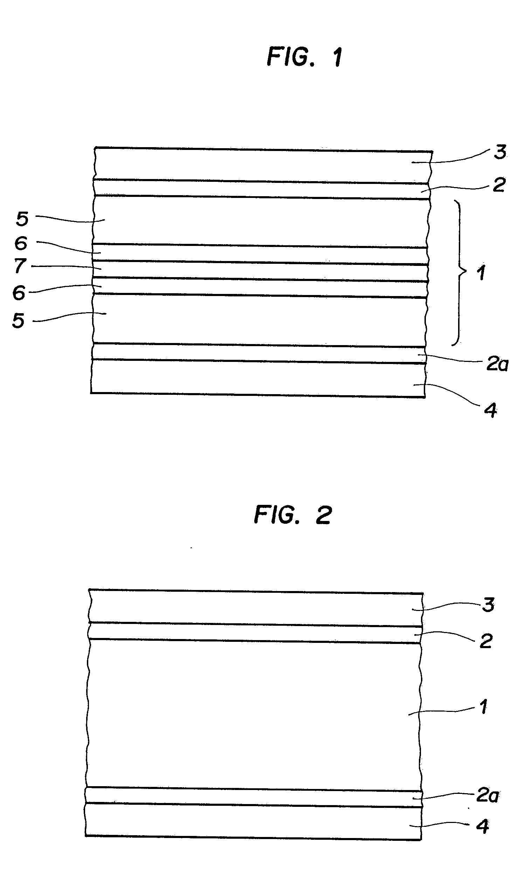

Die Folie nach Fig. 1 weist einen vorzugsweise aus Polystyrol oder Polypropylen bestehenden Träger 1 auf. Auf der einen Seite dieses Trägers 1 ist eine Siegelschicht 4 vorhanden, die aus geeigneten Materialien zum Warmversiegeln von Verpackungsbehältern aus verschiedenen Kunststoffen besteht. Eine zwischen dem Träger 1 und der Siegelschicht 4 sich befindende Schicht eines Haftvermittlers 2a dient zum Verbinden der Siegelschicht 4 mit dem Träger 1 während der Koextrusion. Der Haftvermittler dient nur diesem Zweck und ist als äusserst dünne Schicht mit einer Dicke von 1 bis 10 % der Dicke des Trägers 1 vorhanden. Auf der der Siegelschicht 4 abgewandten Seite des Trägers 1 ist eine Schicht aus thermoplastischem Polyester 3 vorhanden. Eine dünne Schicht eines weiteren Haftvermittlers 2, der sich zwischen dem Träger 1 und der Polyesterschicht 3 befindet, dient zum Verbinden der Polyesterschicht 3 mit dem Träger 1 während der Koextrusion. Diese Polyesterschicht erweist sich vor allem für das Bedrucken der Folie mit Markenzeichen und/oder Werbeaufschriften als vorteilhaft, weil vor dem Druckvorgang keinerlei Vorbehandlungen der Folie notwendig sind. Die Dicke der thermoplastischen Polyesterschicht 3 beträgt im Vergleich zur Dicke der Trägerschicht 1 nur ca. 1 - 20 %. Dadurch lässt sich erreichen, dass die Materialeigenschaften des Trägers 1 als dominierende Komponenten der ganzen Folie erhalten bleiben. Durch die Wahl des Trägers 1 können somit Folien mit bestimmten Eigenschaften hergestellt werden. In der Fig. 2 ist ein Ausführungsbeispiel dargestellt, bei dem der Träger 1 aus den Schichten Polypropylen 5, Haftvermittler 6, ungeordnetes Kopolymer von Ethylen und Vinylalkohol 7, Haftvermittler 6 und Polypropylen 5 besteht. Die Schicht aus ungeordnetem Kopolymer von Ethylen und Vinylalkohol 7 dient in diesem Falle als Gassperrschicht. Folien mit integrierten Gassperrschichten werden immer dann eingesetzt, wenn das Füllgut im Verpackungsbehälter möglichst lange haltbar sein soll.

Damit bei Wärmeversiegelungen mit möglichst kurzen Verarbeitungszeiten gearbeitet werden kann, muss das Siegelwerkzeug möglichst warm sein. Es darf jedoch nicht so warm sein, dass beim Aufbringen des Werkzeuges auf die als Verschlussdeckel dienende Folie die letztere zerstört wird. Im Sinne einer rationellen Versiegelung ist es wünschenswert, Folien mit möglichst hoher Wärmebeständigkeit zu verwenden. Durch ein bekanntes spezielles Verfahren kann die Schicht des thermoplastischen Polyesters 3 nachkristallisiert werden. Die Folie wird dazu während 1 bis 10 Sekunden einer Temperatur von 100 - 200° C ausge setzt. Dadurch wird erreicht, dass sich die Wärmebeständigkeit dieser Schicht um 50 - 100° C erhöht. Dies wirkt sich als weiterer Vorteil für die erfindungsgemässe Folie aus.

Da die Folie durch die Koextrusion in einem Arbeitsgang herstellbar ist und keine lösungsmittelenthaltende Siegelschicht nachträglich aufgebracht werden muss, kann diese Folie, als weiterer Vorteil zu bekannten Ausführungsarten, kostengünstiger hergestellt werden.

**Patentansprüche**

1. Mehrschichtige Folie mit einem Kunststoff als Trägermaterial (1), dadurch gekennzeichnet, dass auf der einen Seite des Trägermaterials (1) eine Schicht aus thermoplastischem Polyester (3) und auf der anderen Seite des Trägermaterials (1) eine lösungsmittelfreie Siegelschicht (4) vorhanden sind, und dass je ein sich zwischen den genannten Schichten (3, 4) und dem Trägermaterial (1) befindlicher Haftvermittler (2, 2a) zum Verbinden zu einem Koextrudat der genannten Schichten (3, 4) mit dem Trägermaterial (1) vorhanden ist.

2. Folie nach Anspruch 1, dadurch gekennzeichnet, dass das Trägermaterial (1) Polypropylen ist.

3. Folie nach Anspruch 1, dadurch gekennzeichnet, dass das Trägermaterial (1) Polystyrol ist.

4. Folie nach Anspruch 1, dadurch gekennzeichnet, dass das Trägermaterial (1) aus folgenden Lagen aufgebaut ist: Polypropylen (5), Haftvermittler (6), ungeordnetes Kopolymer von Ethylen und Vinylalkohl (7), Haftvermittler (6), Polypropylen (5), wobei die Schicht aus ungeordnetem Kopolymer von Ethylen und Vinylalkohol (7) als Gassperrschicht dient.

5. Folie nach einem der Ansprüche 1 bis 4, dadurch gekennzeichnet, dass die Schicht aus thermoplastischem Polyester (3) zum Erreichen einer höheren Wärmebeständigkeit nachkristallisiert ist.

6. Verfahren zur Herstellung der Folie nach einem der Ansprüche 1 bis 4, dadurch gekennzeichnet, dass die Folie auf einer Koextrusionsanlage hergestellt wird und dass die aus verschiedenen Materialien bestehenden Schichten (1, 2, 2a, 3; 4, 5, 6, 7) der Folie in einem Arbeitsgang miteinander verbunden werden.

7. Verwendung der Folie nach einem der Ansprüche 1 bis 5 zum Verschliessen eines Behälters durch Wärmesiegelung, welcher Behälter längs einer Siegelnaht aufreissbar ist.

*FIG. 1*

*FIG. 2*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 048 378 (V.J. PELZEK)<br>* Spalte 4, Zeile 58 - Spalte 5, Zeile 59 * | 1 | B 32 B 27/08<br>B 65 D 65/40 |
| A | | 2,4 | |
| Y | EP-A-0 056 323 (DRG LTD)<br>* Seite 3, Zeilen 9-18; Ansprüche 1,3,4; Seite 2, Zeilen 11-17 * | 1 | |
| A | | 6 | |

RECHERCHIERTE
SACHGEBIETE (Int. Cl.4)

B 32 B

Der vorliegende Recherchenbericht wurde für alle Patentansprüche erstellt

| Recherchenort | Abschlußdatum der Recherche | Prüfer |
|---|---|---|
| DEN HAAG | 15-03-1989 | VAN THIELEN J.B. |